# EUROPEAN PATENT SPECIFICATION

(11) **EP 2 415 830 B1**
(45) Date of publication and mention of the grant of the patent: **19.06.2013**
(21) Application number: 11156139.5
(22) Date of filing: 28.02.2011
(51) Int. Cl.: C08L 23/00, C08L 33/08, C08L 33/10, C08L 75/16, H01B 3/30, H01B 3/44

(54) **Radiation curable resin composition for electrical wire**
Strahlungshärtbare Harzzusammensetzung für einen elektrischen Draht
Composition de résine durcissable par rayonnement pour fil électrique

(30) Priority: 05.08.2010 JP 2010176217
(43) Date of publication of application: 08.02.2012
(73) Proprietor: DSM IP Assets B.V., 6411 TE Heerlen (NL); JSR Corporation, Tokyo 105-8640 (JP)
(72) Inventor: Uchida, Hirofumi, Minato-ku Tokyo 105-8640 (JP); Imai, Hirokazu, Minato-ku Tokyo 105-8640 (JP); Yamashita, Yuutoku, Minato-ku Tokyo 105-8640 (JP); Kurosawa, Takahiko, Minato-ku Tokyo 105-8640 (JP)
(74) Representative: Jansen, Cornelis Marinus

(56) References cited:
- WO-A1-2008/120982
- US-A- 6 021 338
- US-A1- 2010 071 928
- US-B1- 6 355 599

## Description

The invention relates to a radiation curable resin composition for forming a coating layer for electrical wire; wherein the electrical wire is destined for use as automotive electrical wire. In addition, this invention relates to a radiation curable resin composition for forming a coating layer for telephone cable and electrical wire for connecting between electronic devices and inside electronic devices.

Automotive electrical wire, telephone cables, electrical wires for connecting between electronic devices and inside electronic devices and the like are usually insulated electrical wires (also called coated electrical wires) that contain copper wire or aluminum wire or the like with excellent electrical properties and transmission properties as a conductor (hereinafter referred to as core conductor) and a thermoplastic resin such as polyvinyl chloride (PVC) or polyethylene (PE) as a coating layer (also referred to as insulator layer) that covers the conductor. Furthermore, cables with a sheath (protective outer coating) on the outside of one or a plurality of coated electrical wires are also similarly used (see Japanese Laid Open Patent Applications 2001-312925, 2005-187595, 2006-348137 and 2007-45952). Furthermore, coaxial cables that connect television receivers and antennas have a PE coating and a shield on the outside of a conductor, and use PVC or the like as a sheath layer on the outside thereof.

It is known that coating layers made primarily out of thermoplastic resin have a problem that the durability towards external stress is reduced and are insufficient as coating layers, and also have a problem with fusing at high temperatures. Furthermore, with a conventional thermoplastic resin, there is also a problem with inferior manufacturing efficiency for the coated electrical wire.

In a first aspect, the invention is directed to a radiation curable resin composition for electrical wire coating layer, comprising:
(A) a urethane (meth)acrylate having a hard segment derived from an aromatic polyol and a soft segment derived from an aliphatic polyol in a single molecule;
(B) a compound with a cyclic structure and one ethylenic unsaturated group; and
(C) a radiation polymerization initiator.

In a further aspect, the invention is directed to the composition of the invention, wherein the hard segment of the aforementioned component (A) is derived from an aromatic polyol having a cyclic structure and an arithmetic mean molecular weight from 300 to 700 g/mol, and the soft segment is derived from a polyol having an aliphatic structure and an arithmetic mean molecular weight from 300 to 3000 g/mol.

In a further aspect, the invention is directed to the composition of the invention, wherein the hard segment of the aforementioned component (A) is derived from an aromatic polyol having a bisphenol structure and an arithmetic mean molecular weight from 300 to 700 g/mol, and the soft segment is derived from an aliphatic polyol having an aliphatic polyether structure with 2 to 5 carbon atoms and an arithmetic mean molecular weight from 300 to 1000 g/mol.

In a further aspect, the invention is directed to the composition of the invention, wherein the component (A) is obtained by reacting an aromatic polyol, an aliphatic polyol, a polyisocyanate and a (meth)acrylate with a hydroxyl group.

In yet a further aspect, the invention is directed to the composition of the invention, further comprising (D) a silicone compound with an average molecular weight between 800 and 30 000 g/mol.

In yet a further aspect, the invention is directed to the composition of the invention, wherein the (D) silicone compound is a polyether modified silicone or a urethane (meth)acrylate modified silicone.

In a further aspect, the invention is directed to the composition of the invention, wherein component (B) is at least one compound selected from the group consisting of N-vinyl pyrrolidone, N-vinyl caprolactam, isobornyl (meth)acrylate and (meth)acryloyl morpholine.

In a further aspect, the invention is directed to the use of the composition of the invention, for forming an insulator layer on a coated electrical wire with a core conductor and an insulator layer.

In a further aspect, the invention is directed to the use of the composition of the invention, for forming a sheath layer on a cable that has a sheath layer and one or a plurality of coated electrical wires.

In a further aspect, the invention is directed to a sheath layer for a cable or an insulator layer for a coated electrical wire, made by curing the composition of the invention.

In a further aspect, the invention is directed to a cable or coated electrical wire having a sheath or an insulator layer according to the invention.

In yet a further aspect, the invention is directed to a method for preparing a sheath layer for a cable or for an insulator layer or a coated electrical wire, comprising a step of irradiating radiation onto a composition of the invention, and curing.

A further object of the present invention is to provide a radiation curable resin composition for forming a coating layer for electrical wires that has sufficient strength towards external stress, can form a coating layer that does not melt even at high temperature, and that can improve the manufacturing efficiency of the coated electrical wire. Note, with the present invention, the insulator layer of a coated electrical wire or the sheath layer of a cable are referred to as "electrical wire coating layer", and the material performing the electrical wire coating layer is referred to as "electric wire coating material".

Furthermore, the present inventors have focused on a urethane (meth)acrylate-based radiation curable resin composition in order to develop an electrical wire coating material that replaces conventional PVC or PE, and as a result of various investigations, have discovered that a radiation curable resin composition for forming an electrical wire coating layer that can form a coating layer with sufficient strength can be obtained by using a combination of a urethane (meth)acrylate with a hard segment derived from an aromatic polyol and a soft segment derived from an aliphatic polyol, a compound with a cyclic structure and one ethylenic unsaturated group, and a radiation polymerization initiator, and thus the present invention was achieved.

In other words, the present invention provides a radiation curable resin composition for forming an electrical wire coating layer, containing:
(A) a urethane (meth)acrylate having a hard segment derived from an aromatic polyol and a soft segment derived from an aliphatic polyol in a single molecule;
(B) a compound with a cyclic structure and one ethylenic unsaturated group; and
(C) a radiation polymerization initiator.

Furthermore, the present invention provides an insulator layer for a coated electrical wire or a sheath layer for a cable, obtained by curing the aforementioned composition, and also provides a coated electrical wire or cable with the aforementioned insulator layer or sheath layer.

Using the composition of the present invention, an electrical wire coating layer with excellent strength can easily and uniformly be formed by the irradiating with radiation such as ultraviolet light or the like, and the coating layer is made from a hard material with a cross-linking structure made by curing a radiation curable resin composition rather than a thermoplastic resin, and therefore melting will not occur even at temperatures where a conventional thermoplastic resin would melt. Therefore, use is possible even at high temperature, as compared to the case where the coating layer is formed from conventional polyvinylchloride or polyethylene or the like. The electrical wire coating layer formed using the composition of the present invention is strong against external stress because of a high Young's modulus, and because the breaking elongation is high, the coating layer will not easily break even when the electrical wire is bent with a high curvature.

The urethane (meth)acrylate of component (A) that is used to the present invention has a hard segment derived from an aromatic polyol and a soft segment derived from an aliphatic polyol in a single molecule. Herein, the hard segment derived from an aromatic polyol is a rigid structural section, and the soft segment derived from an aliphatic polyol is a flexible structural section.

Generally, urethane (meth)acrylate is a reaction product of a polyol, polyisocyanate, and (meth)acrylate with a hydroxyl group, and the rigidity or flexibility of the entire urethane (meth)acrylate structure is greatly affected by whether the structural section derived from polyol is a hard segment derived from an aromatic polyol or a soft segment derived from an aliphatic polyol. If the urethane (meth)acrylate of components (A) has a hard segment derived from an aromatic polyol and a soft segment derived from an aliphatic polyol, a cured material with mechanical properties that achieve both a high Young's modulus and high breaking elongation can be obtained. In other words, the Young's modulus can be increased by providing a hard segment derived from an aromatic polyol, and the breaking elongation can be increased by providing a soft segment derived from an aliphatic polyol.

For the present invention, hereinafter the hard segment derived from an aromatic polyol will be simply referred to as the "hard segment", and the soft segment derived from an aliphatic polyol will be simply referred to as the "soft segment".

The urethane (meth)acrylate of component (A) is obtained by reacting an aromatic polyol, an aliphatic polyol, a polyisocyanate, and a (meth)acrylate with a hydroxyl group.

The hard segment and the soft segment can be derived from different polyols, or can be derived from a polyol with a rigid aromatic structural section and a flexible aliphatic structural section in a single molecule. For example, bisphenol A is an example of a polyol with a rigid aromatic structure, and polypropylene glycol is an example of a polyol with a flexible aliphatic structure. In contrast, a polyol that is an alkylene oxide adduct of bisphenol A can have a rigid aromatic structural section derived from the bisphenol A and a flexible aliphatic structural section derived from the alkylene oxide. With the present invention, if a polyol has a rigid aromatic structural section and a flexible aliphatic structural section in a single molecule, and if the molecular weight of the flexible aliphatic structural section is 300 g/mol or less, the entire structure derived from polyol is considered as a hard segment in component (A).

Specifically, Uniol DB-400 (manufactured by NOF Corporation), a polypropylene modified bisphenol A, is a diol with a molecular weight of 400 g/mol expressed by the following formula (0). Herein, the molecular weight of the section expressed by (C₃H₆O)ₙ is approximately 90 g/mol. Therefore, a structure derived from DB-400 is treated as if the entire structure is a hard segment in component (A).

HO-(C₃H₆O)ₙ-Ph-C(CH₃)₂-Ph-(C₃H₆O)ₙ-OH **(0)**

In formula **(0)**, Ph represents a phenylene group. n represents the number of repeating units.

By using a urethane (meth)acrylate (A) with a hard segment and a soft segment in a single molecule, the breaking elongation will be superior as compared to the case when a mixture of a urethane (meth)acrylate that has a hard segment but does not have a soft segment and a urethane (meth)acrylate that has a soft segment but does not have a hard segment is used, and therefore a wire coating layer can be obtained that will not easily break even when the electrical wire is bent with a high curvature.

The hard segment is derived from an aromatic polyol with a rigid structure. The aromatic polyol with a rigid structure is not particularly restricted, but an aromatic polyol with a cyclic structure is preferable, and an aromatic polyol with an aromatic ring structure or an alicyclic structure is more preferable. Examples of polyols with an aromatic ring structure or an alicyclic structure include polyether polyols with an aromatic ring structure or an alicyclic structure, as well as polyester polyols with an aromatic ring structure or an alicyclic structure, polycarbonate polyols with an aromatic ring structure or an alicyclic structure, and polycaprolactone polyols with an aromatic ring structure or an alicyclic structure, and the like. The polymerization method of the structural units of these polyols is not particularly restricted, and can be random polymerization, block polymerization, or graft polymerization. Note, the polyol is preferably a diol. The aromatic polyol with a rigid structure preferably has an arithmetic mean molecular weight from 300 to 700 g/mol.

Examples of polyether polyols with an aromatic ring structure or an alicyclic structure include bisphenol A, bisphenol F, alkylene oxide adduct polyols of bisphenol A, alkylene oxide adduct polyols of bisphenol F, hydrogenated bisphenol A, hydrogenated bisphenol F, alkylene oxide adduct polyols of hydrogenated bisphenol A, alkylene oxide adduct polyols of hydrogenated bisphenol F, and other polyether polyols with a bisphenol structure; alkylene oxide adduct polyols of hydroquinone, alkylene oxide adduct polyols of naphthohydroquinone, alkylene oxide adduct polyols of anthrahydroquinone, 1,4-cyclohexane polyol and alkylene oxide adduct polyols thereof, tricyclodecane polyol, tricyclodecane dimethanol, pentacyclopentadecane polyol, pentacyclopentadecane dimethanol, and other cyclic polyether polyols. Of these, polyether polyols with a bisphenol structure are preferable, and alkylene oxide adduct polyols of bisphenol A and tricyclodecane dimethanol are even more preferable. These polyols can be procured as commercial products such as Uniol DA400, DA700, DA1000, DB400 (manufactured by NOF Corporation) and tricyclodecane dimethanol (manufactured by Mitsubishi Chemical Corporation) and the like. Additional examples of polyether polyols include alkylene oxide adduct polyols of bisphenol A, alkylene oxide adduct polyols of bisphenol F, and alkylene oxide adduct polyols of 1,4-cyclohexane polyols and the like. However, in the aforementioned examples of polyether polyols with an aromatic ring structure or an alicyclic structure, the molecular weight of one structural section derived from alkylene oxide is less than 300 g/mol.

The aromatic polyol with a rigid structure can be used individually or as a combination of two or more types.

The soft segment is derived from an aliphatic polyol with a flexible structure. The aliphatic polyol with a flexible structure is not particularly restricted, but a polyol with a short-to-medium-chain aliphatic structure is preferable. Examples of polyols with an aliphatic structure include polyether polyols with an aliphatic structure, as well as polyester polyols with an aliphatic structure, polycarbonate polyols with an aliphatic structure, and polycaprolactone polyols with an alicyclic structure, and the like. If these polyols are made from two or more types of structural units, the polymerization method for the structural units is not particularly restricted, and can be random polymerization, block polymerization, or graft polymerization. The polyol with a flexible structure preferably has an arithmetic mean molecular weight from 300 to 3000 g/mol.

For purposes of this patent application, the arithmetic mean molecular weight of the polyol is the molecular weight determined from the hydroxyl value measured in accordance with JIS K 0070.

Examples of aliphatic polyether polyols include polyethylene glycol, polypropylene glycol, polytetraethyleneglycol, polyhexamethylene glycol, polyheptamethylene glycol, polydecamethylene glycol, as well as aliphatic polyether polyols obtained by ring opening copolymerization of two or more types of ion polymeric cyclic compounds, and the like. Examples of the aforementioned ion polymeric cyclic compounds include cyclic ethers of ethylene oxide, propylene oxide, butane-1-oxide, isobutene oxide, 3,3-bischloromethyloxetane, tetrahydrofuran, 2-methyl tetrahydrofuran, 3-methyl tetrahydrofuran, dioxane, trioxane, tetraoxane, cyclohexene oxide, styrene oxide, epichlorohydrin, glycidyl methacrylate, allylglycidyl ether, allyl glycidyl carbonate, butadiene monoxide, isoprene monoxide, vinyl oxetane, vinyl tetrahydrofuran, vinyl cyclohexene oxide, phenyl glycidyl ether, butyl glycidyl ether, glycidyl benzoate ester and the like. Furthermore, it is possible to use a polyether polyol ring made by open ring copolymerization of the aforementioned ion polymeric cyclic compounds, and ion polymeric cyclic imines such as ethyleneimine, ion polymeric cyclic lactones such as β -propiolactone, and lactide glycolate, or dimethyl cyclopolysiloxanes. Examples of specific combinations of the aforementioned two or more types of ion polymeric cyclic compounds include tetrahydrofuran and propylene oxide, tetrahydrofuran and 2-methyl tetrahydrofuran, tetrahydrofuran and 3-methyl tetrahydrofuran, tetrahydrofuran and ethylene oxide, propylene oxide and ethylene oxide, butene-1-oxide and ethylene oxide, and a 3-component polymer of tetrahydrofuran, butene-1-oxide, and ethylene oxide, and the like. The ring opening copolymers of these ion polymeric cyclic compounds can be random bonded or can be block bonded.

The aliphatic polyol with a flexible structure can be used individually or as a combination of two or more types.

In component (A), the hard segment is preferably derived from an aromatic polyol with an aromatic structure and an arithmetic mean molecular weight from 300 to 700, and more preferably is derived from an aromatic polyol with a bisphenol structure and an arithmetic mean molecular weight from 300 to 700 g/mol.

Furthermore, the soft segment is preferably derived from an aliphatic polyol with an aliphatic structure and an arithmetic mean molecular weight from 300 to 3000 g/mol, and more preferably is derived from an aliphatic polyol with an aliphatic polyether structure and an arithmetic mean molecular weight from 300 to 1000 g/mol.

Examples of the polyisocyanate, and particularly of diisocyanates include 2,4-toluene diisocyanate, 2,6-toluene diisocyanate, 1,3-xylene diisocyanate, 1,4-xylene diisocyanate, 1,5-naphthalene diisocyanate, m-phenylene diisocyanate, p-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, 1,6-hexane diisocyanate, isophorone diisocyanate, methylene bis(4-cyclohexyl isocyanate), 2,2,4-trimethylol hexamethylene diisocyanate, bis(2-isocyanate ethyl) fumarate, 6-isopropyl-1,3-phenyl diisocyanate, 4-diphenylpropane diisocyanate, lysine diisocyanate, hydrogenated diphenylmethane diisocyanate, hydrogenated xylene diisocyanate, tetramethylxylene diisocyanate, 2,5 (or 2,6)-bis(isocyanate methyl)-dicyclo[2.2.1]heptene, and the like. In particular, 2,4-toluene diisocyanate, isophorone diisocyanate, xylene diisocyanate, methylene bis(4-cyclohexyl isocyanate) and the like are preferable.

These polyisocyanate can be used individually, or as a combination of two or more types.

Examples of the (meth)acrylate containing a hydroxyl group include 2-hydroxyethyl (meth)acrylate, 2-hydroxypropyl (meth)acrylate, 2-hydroxybutyl (meth)acrylate, 2-hydroxy-3-phenyloxypropyl (meth)acrylate, 1,4-butanepolyol mono(meth)acrylate, 2-hydroxyalkyl (meth)acryloyl phosphate, 4-hydroxycyclohexyl (meth)acrylate, 1,6-hexanepolyol mono(meth)acrylate, neopentylglycol mono(meth)acrylate, trimethylolpropane di(meth)acrylate, trimethylolethane di(meth)acrylate, pentaerythritol tri(meth)acrylate, dipentaerythritol penta(meth)acrylate, and (meth)acrylates expressed by the following formulas (1) or (2)

H₂C₌C(R¹)-COOCH₂CH₂-(OCOCH₂CH₂CH₂CH₂CH₂)ₙ-OH **(1)**

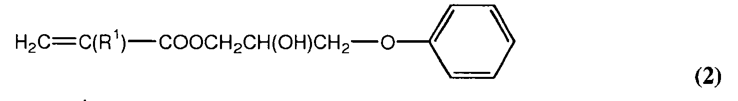

(in the formulas, R¹ represents hydrogen atom or a methyl group, and n is an integer from 1 to 15).

Furthermore, compounds obtained by the additive reaction of methacrylic acid and a compound containing a glycidyl group such as alkyl glycidyl ether, allyl glycidyl ether and glycidyl (meth)acrylate can also be used.

Of these (meth)acrylates containing a hydroxyl group, 2-hydroxyethyl (meth)acrylate and 2-hydroxypropyl (meth)acrylate and the like are particularly preferable.

These (meth)acrylate compounds containing a hydroxyl group can be used individually, or as a combination of two or more types.

The ratio of polyol, polyisocyanate and (meth)acrylate containing a hydroxyl group that are used is preferably from 1.2 - 1.8 equivalents of isocyanate groups included in the polyisocyanate and from 0.2 - 0.8 equivalents of hydroxyl groups in the (meth)acrylate containing a hydroxyl group for 1 equivalent of hydroxyl group included in the polyol.

Examples of a method for synthesizing the urethane (meth)acrylate of component (A) include a method of adding and reacting the polyol, polyisocyanate, and (meth)acrylate containing a hydroxyl group at one time; a method of reacting the polyol and the polyisocyanate, and then reacting the (meth)acrylate containing a hydroxyl group; a method of reacting the polyisocyanate and the (meth)acrylate containing a hydroxyl group, and then reacting the polyol; and a method of reacting the polyisocyanate and (meth)acrylate containing a hydroxyl group, and then reacting polyol and finally again reacting (meth)acrylate containing a hydroxyl group.

At this time, both an aromatic polyol containing a hard segment and an aliphatic polyol containing a soft segment are reacted as the polyol, and suggested methods include a method of simultaneously reacting an aromatic polyol containing a hard segment and an aliphatic polyol containing a soft segment, a method of reacting an aromatic polyol containing a hard segment and then reacting an aliphatic polyol containing a soft segment, and a method of reacting an aliphatic polyol containing a soft segment and then reacting a polymer containing a hard segment derived from an aromatic polyol.

Note, dilute monomer can be added to the urethane (meth)acrylate this reaction solution in order to prevent excessive increase in the viscosity of the reaction solution. The dilute monomer will not react with the other components during the urethane (meth)acrylate synthesis. The dilute monomer can be arbitrarily selected from compounds that are a component (B) described below and do not have a hydroxyl group.

In the reaction of these compounds, between 0.01 and 1 mass parts of a urethane catalyst such as copper naphthenate, cobalt naphthenate, zinc naphthenate, dibutyl tin dilaurate, triethyl amine, 1,4-diazabicyclo[2.2.2]octane, 2,6,7-trimethyl-1,4-diazabicyclo[2.2.2]octane and the like are preferably used for a total of 100 mass parts of reactants. Furthermore, the reaction temperature is normally between 10 and 90 °C, but between 30 and 80 °C is particularly preferable.

The amount of urethane (meth)acrylate which is component (A) that is added is normally from 10 to 65 mass%, preferably from 20 to 60 mass% in 100 mass% of total composition, from the perspective of strength of the electric wire coating layer, and particularly Young's modulus, breaking elongation, and viscosity of the composition.

A compound containing a cyclic structure and one ethylenic unsaturated group which is component (B) is a polymeric monofunctional compound with a cyclic structure other than component (A). By using this compound as component (B), the strength, and particularly the Young's modulus and breaking elongation of the electrical wire coating layer obtained by the composition of the present invention will be increased. Herein, the cyclic structure can be an alicyclic structure, a heterocyclic structure containing a nitrogen atom or an oxygen atom, or an aromatic ring or the like, but of these, alicyclic structures and heterocyclic structures containing a nitrogen atom are particularly preferable.

Examples of the polymeric monofunctional compound containing a cyclic structure (B) include N-vinyl pyrrolidone, N-vinyl caprolactam, and other lactams containing a vinyl group; isobornyl (meth)acrylate, bornyl (meth)acrylate, tricyclodecanyl (meth)acrylate, dicyclopentanyl (meth)acrylate and other (meth)acrylates containing an alicyclic structure; benzyl (meth)acrylate, 4-butyl cyclohexyl (meth)acrylate, (meth)acryloyl morpholine, vinyl imidazole, and vinyl pyridine and the like. Other examples include the compounds expressed by the following formulas (3) through (5).

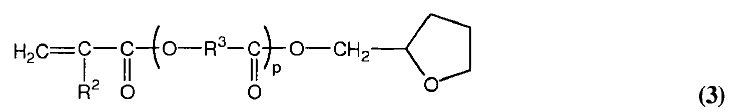

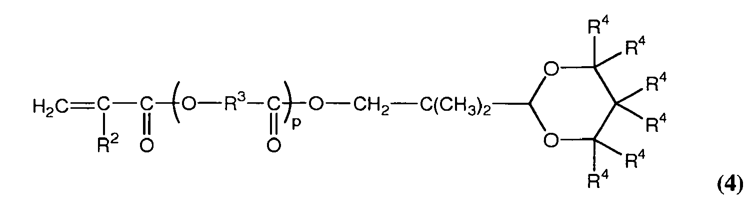

In these formulas, R² represents a hydrogen atom or a methyl group, R³ represents an alkylene group with 2 to 8 carbon atoms, preferably 2 to 5 carbon atoms, R⁴ represents a hydrogen atom or a methyl group, and p is preferably an integer from 1 to 4.

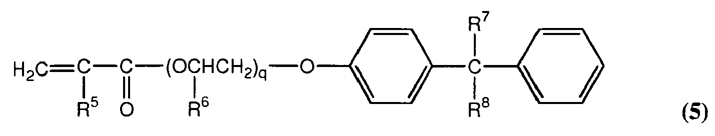

In this formula, R⁵, R⁶, R⁷, and R⁸ independently represent a-atom or a methyl group, and q is an integer from 1 to 5.

Of these components (B), N-vinyl pyrrolidone, N-vinyl caprolactam, isobornyl (meth)acrylate, and (meth)acryloyl morpholine are preferable.

Examples of commercial products of component (B) that can be used include IBXA (manufactured by Osaka Organic Chemical Industry Ltd.), Aronix M-111, M-113, M-114, M-117, TO-1210 (manufactured by Toagosei Co., Ltd.), ACMO (manufactured by Kohjin Co., Ltd.), NVC, NVP (manufactured by BASF), V-Pyrol, V-Cap (manufactured by ICP), and the like.

The amount of monofunctional compound containing a cyclic structure which is component (B) that is added is normally from 30 to 80 mass%, preferably from 35 to 70 mass%, and particularly preferably from 40 to 60 mass% in 100 mass% of total composition, from the perspective of strength of the electric wire coating layer, and the viscosity of the composition.

Examples of the radiation polymerization initiator (C) that is used with the present invention include 1-hydroxycyclohexyl phenyl ketone, 2,2-dimethoxy-2-phenyl acetophenone, xanthone, fluorenone, benzaldehyde, fluorene, anthraquinone, triphenyl amine, carbazol, 3-methyl acetophenone, 4-chlorobenzophenone, 4,4'-dimethoxy benzophenone, 4,4'-diamino benzophenone, Michler's ketone, benzo isopropyl ether, benzoin ethyl ether, benzyl dimethyl ketal, 1-(4-isopropyl phenyl)-2-hydroxy-2-methyl propane-1-one, 2-hydroxy-2-methyl-1-phenyl propane-1-one, thioxanthone, diethyl thioxanthone, 2-isopropyl thioxanthone, 2-chlorothioxanthone, 2-methyl-1-[4-(methylthio) phenyl]-2-morpholino-propane-1-one, 2,4,6-trimethyl benzoyl diphenyl phosphine oxide, bis-(2,6-dimethoxy benzoyl)-2,4,4-trimethyl tensile phosphine oxide; Irgacure 184, 369, 651, 500, 907, CGI 1700, CGI 1750, CGI 1850, CG24-61; Darocure 1116, 1173 (all manufactured by Ciba Specialty Chemicals); Lucirin TPO (manufactured by BASF); Ubecryl P36 (manufactured by UCB), and the like.

The amount of radiation polymerization initiator (C) added is preferably between 0.1 and 10 mass%, particularly between 0.3 and 7 mass% for 100 mass% of total composition.

Furthermore, a photosensitizer such as triethylamine, diethylamine, N-methyl diethanolamine, ethanolamine, 4-dimethylamino benzoic acid, methyl 4-dimethylamino benzoate, ethyl 4-dimethyl amino benzoate, isoamyl 4-dimethylamino benzoate; Ubecryl P102, 103, 104, and 105, (all manufactured by UCB) can also be used.

The composition of the present invention can also contain (D) a silicone compound in order to improve the abrasion resistance of the electrical wire coating layer.

Examples of the silicone compounds include polyether modified silicone, alkyl modified silicone, urethane (meth)acrylate modified silicone, urethane modified silicone, methyl stearyl modified silicone, epoxy polyether modified silicone, alkylaralkyl polyether modified silicone and the like. Of these, polyether modified silicone and urethane (meth)acrylate modified silicone are particularly preferable.

The polyether modified silicone is preferably a polydimethyl siloxane compound with a group expressed by R¹¹-(R¹²O)ₛ-R¹³ - is bonded to at least one silicon atom (wherein R¹¹ represents a hydroxyl group or an alkoxy group with 1 to 10 carbon atoms, R¹² represents an alkylene group with 2 to 4 carbon atoms (R¹² can represent a blend of two or more types of alkylene groups), R¹³ represents an alkylene group with 2 to 12 carbon atoms, and s represents an integer from 1 to 20). Of these, those where R¹² represents an ethylene group or a propylene group are preferable, and an ethylene group is particularly preferable.

Examples of commercial silicone compounds that do not have a polymeric group such as an ethylenic unsaturated group or the like include SH28PA (a dimethyl polysiloxane alkylene copolymer; manufactured by Dow Corning Toray), Paintad 19, 54 (a dimethyl polysiloxane polyoxyalkylene copolymer; manufactured by Dow Corning Toray), FM0411 (Siraprene, manufactured by Chisso), SF8428 (dimethyl polysiloxane polyoxyalkylene copolymer (containing an OH sidechain); manufactured by Dow Chemical Toray), BYK UV3510 (dimethyl polysiloxane polyoxyalkylene copolymer; manufactured by Byk Chemie Japan), DC 57 (dimethyl polysiloxane polyoxyalkylene copolymer; manufactured by Dow Corning Toray silicone) and the like. Furthermore, examples of commercial products of silicone compounds with ethylenic unsaturated groups include Tego Rad 2300 and 2200N (manufactured by Tego Chemie) and the like.

Furthermore, the urethane (meth)acrylate modified silicone is preferably a urethane (meth)acrylate other than component (A) that has a polydimethyl polysiloxane structure, and can be obtained by reacting a silicone containing a hydroxyl group, a diisocyanate, and a (meth)acrylate containing a hydroxyl group.

The silicone compound (D) preferably has an average molecular weight of 800 to 30 000 g/mol, from the perspective of abrasion resistance of the electrical wire coating layer. The average molecular weight is more preferably between 1000 and 20 000 g/mol, and even more preferably between 1200 and 15 000 g/mol.

The molecular weight of the silicone compound (D) is the arithmetic mean of the molecular weight calculated as polystyrene using a gel permeation chromatography method using tetrahydrofuran as a developing solvent.

From the perspective of abrasion resistance of the electrical wire coating layer, the amount of component (D) is preferably from 0.1 to 10 mass% for 100 mass% of total composition, more preferably from 0.3 to 7 mass%, and particularly preferably from 0.5 to 5 mass%.

Furthermore, (E) a compound containing two or more ethylenic unsaturated groups can be added to the composition of the present invention to the extent that the effect of the present invention is not hindered. The compounds with two or more ethylenic unsaturated groups (E) are polymeric polyfunctional compounds. Examples of polymeric polyfunctional compounds (E) include trimethylol propane tri(meth)acrylate, trimethylol propane trioxyethyl (meth)acrylate, pentaerythritol tri(meth)acrylate, triethylene glycol diacrylate, tetraethylene glycol di(meth)acrylate, dicyclodecane dimethylol diacrylate, 1,4-butane polyol di(meth)acrylate, 1,6-hexane polyol di(meth)acrylate, neopentyl glycol di(meth)acrylate, tripropylene glycol di(meth)acrylate, neopentyl glycol di(meth)acrylate, bisphenol A diglycidyl ether with (meth)acrylic acid attached to both ends, pentaerythritol tri(meth)acrylate, pentaerythritol tetra(meth)acrylate, polyester di(meth)acrylate, tris(2-hydroxyethyl) isocyanurate tri(meth)acrylate, tris(2-hydroxyethyl) isocyanurate di(meth)acrylate, dicyclodecane dimethylol diacrylate, ethylene oxide or propylene oxide adducts of bisphenol A polyol di(meth)acrylate, ethylene oxide or propylene oxide adduct of hydrogenated bisphenol A polyol di(meth)acrylate, epoxy (meth)acrylate where (meth)acrylate is added to a glycidyl ether of bisphenol A, triethylene glycol divinyl ether, and compounds expressed by the following formula (6) 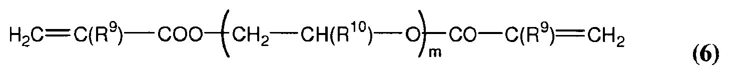 In this formula, R⁹ and R¹⁰ independently represent a hydrogen atom or methyl group, and m is an integer from 1 to 100.

Of these polymeric polyfunctional compounds, compounds expressed by the aforementioned formula (6) such as ethylene glycol di(meth)acrylate, polyethylene glycol di(meth)acrylate, tricyclodecane dimethylol diacrylate, ethylene oxide adduct of bisphenol A di(meth)acrylate, tris(2-hydroxyethyl) isocyanurate tris(meth)acrylate, tripropylene glycol di(meth)acrylate are preferable, and of these, tripropylene glycol di(meth)acrylate is particularly preferable.

Commercial products of these polymeric polyfunctional compounds that can be used include Yupimer UV, SA1002 (products of Mitsubishi Chemical), Aronix M-215, M-315, M-325 (products of Toagosei). Furthermore, Aronix TO-1210 (product of Toagosei) can also be used.

The amount of these compounds with two or more ethylenic unsaturated groups (E) is from 0 to 20 mass% in 100 mass% of total composition, preferably from 0 to 10 mass%, particularly preferably from 0 to 5 mass%, and most preferably 0 mass%. If more than 20 mass% is added, the breaking strength of the electrical wire coating layer will be negatively affected.

If necessary, a non-silicone lubricant or an agent that increases adhesion to the conductor can be added to the composition of the present invention.

Examples of non-silicone lubricants include liquid paraffin, paraffin, polyethylene powder, modified polyethylene powder, PTFE powder, hydrocarbon-based oil, and polyether based oils and the like.

The agent that increases adhesion to the conductor can be a phosphorus containing (meth)acrylate other than component (A), (B), and (E), or a silane coupling agent or the like.

Furthermore if necessary, various types of additives can be added to the composition of the present tension to the extent that the properties of the invention are not lost, and examples include antioxidants, colorant, UV absorbers, light stabilizers, thermal polymerization inhibitors, leveling agents, surfactants, preservatives, plasticizers, fillers, anti-aging agents, wetting improving agents, and paint surface modifiers and the like.

The viscosity of the composition of the present invention at 25 °C is preferably from 0.5 to 50 Pa·s, more preferably from 1 to 30 Pa·s. If the viscosity is within the aforementioned range, forming a coated electrical wire or forming a coating layer on a cable will be easy. The aforementioned viscosity can be measured using a B-type viscometer.

The insulation layer of the coated electrical wire or the sheath layer of the cable is manufactured by irradiating with radiation to harden the composition of the present invention. Note, the radiation can be an infrared light beam, visible light beam, ultraviolet light beam, X-ray beam, electron beam, α-beam, β-beam or y-beam or the like.

The Young's modulus of the hardened material obtained by curing the composition of the present invention is preferably from 500 to 2200 MPa, more preferably from 800 to 2000 MPa. The breaking strength is preferably from 10 to 150 MPa, more preferably from 30 to 70 MPa. The breaking elongation is preferably from 70 to 400 %, more preferably from 80 to 200 %. If the Young's modulus, breaking strength, and breaking elongation of the cured material are within the aforementioned range, the cured material will be strong against external forces, and a tough electrical wire coating layer with minimal breaking even when the electrical wire is bent with a high curvature can be obtained. Note, the Young's modulus and the breaking strength are measured at 23 °C at 50 % relative humidity in accordance with JIS K 7127/5/50. However, the Young's modulus is a value determined from the resistive force at 2.5 % strain.

The composition of the present invention is useful as a radiation curable resin composition for forming a coating layer on coated electrical wire, and particularly for relatively fine electrical wires and cables such as electrical wires for automobiles, and electrical wires for connecting between electronic devices and within electronic devices. Furthermore, the composition of the present invention is also useful as a radiation curable resin composition for forming a sheath layer that contacts to the outside of the shield of electrical wires that have a core conductor and a shield (shielding layer). If the composition of the present invention is applied and irradiated with radiation, and electrical wire coating layer with excellent uniformity and strength and that will not melt even at high temperature can easily be formed.

Next, the present invention will be described below in detail by presenting examples, but the present invention is not restricted in any way to these examples.

### Examples

### Manufacturing Example 1: (A) Urethane (meth)acrylate Synthesis 1

0.17 g of 2,6-di-t-butyl-p-cresol, 179 g of 2,4-tolylene diisocyanate, 205 g of a propylene oxide adduct diol of bisphenol A with an arithmetic mean molecular weight of 400 g/mol, 256 g of polytetramethylene glycol with an arithmetic mean molecular weight of 1000 g/mol, and 300 g of isobornyl acrylate were added to a reaction vessel with a stirrer and stirred until uniform. 0.56 g of dibutyl tin dilaurate was added by drops while cooling the reaction vessel so that the solution temperature did not exceed 60 °C, and then the solution was mixed for 1 hour at a solution temperature between 55 and 60 °C. Next, 59.5 g of hydroxyethyl acrylate was added by drops while cooling the reaction vessel so that the solution temperature did not exceed 65 °C, and then the solution was mixed for two hours at a solution temperature of 60 to 65 °C, and the reaction was completed when the residual isocyanate was 0.1 mass% or less. The urethane acrylate obtained is referred to as UA-1. Note, isobornyl acrylate was used as a diluting monomer.

The main component in UA-1 was the urethane acrylate expressed by the following formula (**7**), and had a hard segment derived from a propylene oxide adduct diol of bisphenol A and a soft segment derived from polytetramethylene glycol.

HEA-TDI-(POBA400-TDI)₂-PTMG1000-TDI-HEA **(7)**

In formula (**7**), "POBA400" represents a structural section derived from a propylene oxide adduct diol of bisphenol A with an arithmetic mean molecular weight of 400 g/mol, "PMTG1000" represents a structural section derived from polytetramethylene glycol with an arithmetic mean molecular weight of 1000 g/mol, "TDI" represents a structural section derived from 2,4-tolylene diisocyanate, and "HEA" represents a structural section derived from hydroxyethyl acrylate.

### Manufacturing Example 2: (A) Urethane (meth)acrylate Synthesis 2

0.17 g of 2,6-di-t-butyl-p-cresol, 205 g of 2,4-toluene diisocyanate, 235 g of a propylene oxide adduct diol of bisphenol A with an arithmetic mean molecular weight of 400 g/mol, 191 g of polytetramethylene glycol with an arithmetic mean molecular weight of 650 g/mol, and 300 g of isobornyl acrylate were added to a reaction vessel with a stirrer and stirred until uniform. 0.56 g of dibutyl tin dilaurate was added by drops while cooling the reaction vessel so that the solution temperature did not exceed 60 °C, and then mixed for 1 hour at a solution temperature between 55 and 60 °C. Next, 68.3 g of hydroxyethyl acrylate was added by drops while cooling the reaction vessel so that the solution temperature did not exceed 65 °C, and then the solution was mixed for two hours at a solution temperature of 60 to 65 °C, and the reaction was completed when the residual isocyanate was 0.1 mass% or less. The urethane acrylate obtained is referred to as UA-2.

The main component in UA-2 was the urethane acrylate expressed by the following formula (**8**), and had a hard segment derived from a propylene oxide adduct diol of bisphenol A and a soft segment derived from polytetramethylene glycol.

HEA-TDI-(POBA400-TDI)₂-PTMG650-TDI-HEA **(8)**

In formula (**8**), "PTMG650" is a structural section derived from polytetramethylene glycol with an arithmetic mean molecular weight of 650 g/mol. "POBA400", "TDI", and "HEA" are the same as in formula (7).

### Manufacturing Example 3: (A) Urethane (meth)acrylate Synthesis 3

0.17 g of 2,6-di-*t*-butyl-*p*-cresol, 226 g of 2,4-toluene diisocyanate, 108 g of a propylene oxide adduct diol of bisphenol A with an arithmetic mean molecular weight of 400 g/mol, 303 g of polypropylene glycol with an arithmetic mean molecular weight of 400 g/mol, and 300 g of isobornyl acrylate were added to a reaction vessel with a stirrer and stirred until uniform. 0.56 g of dibutyl tin dilaurate was added by drops while cooling the reaction vessel so that the solution temperature did not exceed 60 °C, and then mixed for 1 hour at a solution temperature between 55 and 60 °C. Next, 62.8 g of hydroxyethyl acrylate was added by drops while cooling the reaction vessel so that the solution temperature did not exceed 65 °C, and then the solution was mixed for two hours at a solution temperature of 60 to 65 °C, and the reaction was completed when the residual isocyanate was 0.1 mass% or less. The urethane acrylate obtained is referred to as UA-3.

The main component in UA-3 was the urethane acrylate expressed by the following formula (**9**), and had a hard segment derived from an aromatic polyol which is a propylene oxide adduct diol of bisphenol A and a soft segment derived from an aliphatic polyol which is polypropylene glycol.

HEA-TDI-POBA400-TDI-(PPG400-TDI)₂.₈-HEA **(9)**

In formula (**9**), "PPG400" is a structural section derived from polypropylene glycol with an arithmetic mean molecular weight of 400 g/mol. "POBA400", "TDI", and "HEA" are the same as in formula (**7**).

### Manufacturing Example 4: (A) Urethane (meth)acrylate Synthesis 4

0.17 g of 2,6-di-t-butyl-p-cresol, 170 g of 2,4-toluene diisocyanate, 130 g of a propylene oxide adduct diol of bisphenol A with an arithmetic mean molecular weight of 400 g/mol, 325 g of polytetramethylene glycol with an arithmetic mean molecular weight of 1000 g/mol, and 300 g of isobornyl acrylate were added to a reaction vessel with a stirrer and stirred until uniform. 0.56 g of dibutyl tin dilaurate was added by drops while cooling the reaction vessel so that the solution temperature did not exceed 60 °C, and then mixed for 1 hour at a solution temperature between 55 and 60 °C. Next, 75.4 g of hydroxyethyl acrylate was added by drops while cooling the reaction vessel so that the solution temperature did not exceed 65 °C, and then the solution was mixed for two hours at a solution temperature of 60 to 65 °C, and the reaction was completed when the residual isocyanate was 0.1 mass% or less. The urethane acrylate obtained is referred to as UA-4.

The main component in UA-4 was the urethane acrylate expressed by the following formula (**10**), and had a hard segment derived from an aromatic polyol which is a propylene oxide adduct diol of bisphenol A and a soft segment derived from an aliphatic polyol which is polytetramethylene glycol.

HEA-TDI-P0BA400-TDI-PTMG1000-TDI-HEA **(10)**

In formula (**10**), "POBA400", "PTMG1000", "TDI", and "HEA" are the same as in formula (**7**).

### Comparative Manufacturing Example 1: Urethane (Meth)acrylate Not Corresponding to Component (A) Synthesis 1

0.24 g of 2,6-di-t-butyl-p-cresol, 220 g of 2,4-toluene diisocyanate, and 632 g of polytetramethylene glycol with an arithmetic mean molecular weight of 1000 g/mol were added to a reaction vessel with a stirrer and stirred until uniform. 0.56 g of dibutyl tin dilaurate was added by drops while cooling the reaction vessel so that the solution temperature did not exceed 60 °C, and then mixed for 1 hour at a solution temperature between 55 and 60 °C. Next, 147 g of hydroxyethyl acrylate was added by drops while cooling the reaction vessel so that the solution temperature did not exceed 65 °C, and then the solution was mixed for 3 hours at a solution temperature of 60 to 65 °C. The reaction was completed when the residual isocyanate was 0.1 mass% or less. The urethane acrylate obtained is referred to as UA'-1.

The main component in UA'-1 was the urethane acrylate expressed by the following formula (**11**), which had a soft segment derived from an aliphatic polymer which is polytetramethylene glycol, but did not have a hard segment derived from an aromatic polyol.

HEA-TDI-PTMG1000-TDI-HEA **(11)**

In formula (**11**), "PTMG1000", "TDI", and "HEA" are the same as in formula (**7**).

### Comparative Manufacturing Example 2: Urethane (Meth)acrylate Not Corresponding to Component (A) Synthesis 2

0.24 g of 2,6-di-t-butyl-p-cresol, 135 g of 2,4-toluene diisocyanate, and 774 g of polytetramethylene glycol with an arithmetic mean molecular weight of 2000 g/mol were added to a reaction vessel with a stirrer and stirred until uniform. 0.56 g of dibutyl tin dilaurate was added by drops while cooling the reaction vessel so that the solution temperature did not exceed 60 °C, and then mixed for 1 hour at a solution temperature between 55 and 60 °C. Next, 89.9 g of hydroxyethyl acrylate was added by drops while cooling the reaction vessel so that the solution temperature did not exceed 65 °C, and then the solution was mixed for 3 hours at a solution temperature of 60 to 65 °C, and the reaction was completed when the residual isocyanate was 0.1 mass% or less. The urethane acrylate obtained is referred to as UA' -2.

The main component in UA'-2 was the urethane acrylate expressed by the following formula (**12**), which had a soft segment derived from an aliphatic polyol which is polytetramethylene glycol, but did not have a hard segment derived from an aromatic polyol.

HEA-TDI-PTMG2000-TDI-HEA **(12)**

In formula (**12**), "PTMG2000" is a structural section derived from polytetramethylene glycol with an arithmetic mean molecular weight of 2000 g/mol, and, "TDI" and "HEA" are the same as in formula (**7**).

### Comparative Manufacturing Example 3: Urethane (Meth)acrylate Not Corresponding to Component (A) Synthesis 3

0.17 g of 2,6-di-t-butyl-p-cresol, 248 g of 2,4-toluene diisocyanate, 285 g of a propylene oxide adduct diol of bisphenol A with an arithmetic mean molecular weight of 400 g/mol, and 300 g of isobornyl acrylate were added to a reaction vessel with a stirrer and stirred until uniform. 0.56 g of dibutyl tin dilaurate was added by drops while cooling the reaction vessel so that the solution temperature did not exceed 60 °C, and then mixed for 1 hour at a solution temperature between 55 and 60 °C. Next, 165.6 g of hydroxyethyl acrylate was added by drops while cooling the reaction vessel so that the solution temperature did not exceed 65 °C, and then the solution was mixed for 3 hours at a solution temperature of 60 to 65 °C, and the reaction was completed when the residual isocyanate was 0.1 mass% or less. The urethane acrylate obtained is referred to as UA'-3.

The main component in UA'-3 was the urethane acrylate expressed by the following formula **(13),** and had a hard segment derived from an aromatic polyol which is a propylene oxide adduct diol of bisphenol A, but did not have a soft segment derived from an aliphatic polyol.

HEA-TDI-POBA400-TDI-HEA **(13)**

In formula (13), "POBA400", "TDI", and "HEA" are the same as in formula (**7**).

### Comparative Manufacturing Example 4: Urethane (Meth)acrylate Not Corresponding to Component (A) Synthesis 4

0.24 g of 2,6-di-t-butyl-p-cresol, 428 g of 2,4-toluene diisocyanate, and 0.80 g of dibutyl tin dilaurate were added to a reaction vessel with a stirrer and stirred until uniform. 571 g of hydroxyethyl acrylate was added by drops while cooling the reaction vessel so that the solution temperature did not exceed 65 °C, and then the solution was mixed for 5 hours at a solution temperature of 60 to 65 °C. The reaction was completed when the residual isocyanate was 0.1 mass% or less. The urethane acrylate obtained is referred to as UA' -4.

The main component in UA'-4 was the urethane acrylate expressed by the following formula (**14**), and did not have a hard segment derived from an aromatic polyol nor a soft segment derived from an aliphatic polyol.

HEA-TDI-HEA **(14)**

In formula (**14**), "TDI" and "HEA" are the same as in formula (7).

### Examples 1 - 4 and Comparative Examples 1 - 2

Each of the components of the compositions shown in Table 1 were added to a reaction vessel equipped with a stirrer and stirred for 1 hour while controlling the solution temperature to 60 °C, to obtain liquid curable resin compositions. Note, the formulations amounts shown in Table 1 are in mass parts.

### Test Example

The liquid curable resin composition in the aforementioned embodiments and comparative examples were cured by the following methods to fabricate test pieces, and then the following evaluations were performed. The results are also shown in Table 1.
(1) Viscosity
   The viscosity at 25 °C of the compositions obtained in the embodiments and comparative examples was measured using a B-type viscometer.
(2) Young's modulus, breaking strength, breaking elongation:
   Liquid curable resin composition was applied onto a glass plate using a 15 mil applicator bar (corresponding to a film thickness of approximately 200 µm) and then hardened by irradiating with an ultraviolet light beam at an energy level of 500 mJ/cm² in a nitrogen gas environment to obtain a film for measuring the Young's modulus. After allowing to sit for 1 day at 23 °C and 50 % relative humidity, and then a tensile test was performed at 23 °C and 50 % relative humidity in accordance with JIS K 7127/5/50. The Young's modulus, breaking strength, and breaking elongation were then measured. However, the Young's modulus is determined from the resistive force at 2.5 % strain.

| Table 1 | | Example 1 | Example 2 | Example 3 | Example 4 | Comparative Example 1 | Comparative Example 2 |
|---|---|---|---|---|---|---|---|
| (A) | UA-1 | 45 | | | | | |
| | UA-2 | | 45 | | | | |
| | UA-3 | | | 55 | | | |
| | A-4 | | | | 55 | | |
| (non-A) | UA'-1 | | | | | 25 | |
| | UA'-2 | | | | | | 26 |
| | UA'-3 | | | | | 30 | 17 |
| | UA'-4 | | | | | | 16 |
| (B) | isobornyl acrylate | 35 | 35 | 25 | 25 | 25 | 25 |
| | acryloyl morpholine | 20 | 20 | | | 20 | 16 |
| | vinylpyrrolidone | | | 20 | 20 | | |
| (C) | Irgacure 184 | 3 | 3 | 3 | 3 | 3 | 3 |
| (D) | SH28PA | 0.025 | 0.025 | | | 0.025 | |
| | SH190 | 0.075 | 0.075 | | | 0.075 | 0.7 |
| | Urethane acrylate modified silicone | 1 | 1 | | | 1 | 1 |
| Additive | Irganox 245 | 0.3 | 0.3 | 0.3 | 0.3 | 0.3 | 0.3 |
| Total | | 104.4 | 104.4 | 103.31 | 103.31 | 104.4 | 105.0 |
| Viscosity (Pa·s) @25 °C | | 6.8 | 12 | 9.0 | 2.8 | 5.8 | 2.6 |
| Young's modulus (MPa) | | 1700 | 1800 | 2000 | 1200 | 1800 | 1200 |
| Breaking strength (MPa) | | 50 | 55 | 49 | 57 | 44 | 47 |
| Breaking elongation (%) | | 120 | 100 | 100 | 120 | 60 | 50 |

| | | | | | | | |
|---|---|---|---|---|---|---|---|
| In Table 1: Irgacure 184: 1-hydroxy-cyclohexyl-phenyl-ketone, manufactured by Ciba Specialty Chemicals. SH28PA: dimethylpolysiloxane polyoxyalkylene copolymer, average molecular weight 3800 g/mol, manufactured by Dow Corning Toray. SH190PA: dimethylpolysiloxane polyoxyalkylene copolymer, average molecular weight 25 000 g/mol, manufactured by Dow Corning Toray. Urethane acrylate modified silicone: Siraprene FM0411 (manufactured by Chisso), reaction product of 2,4-tolylene diisocyanate and 2-hydroxyethyl acrylate, average molecular weight 1600 g/mol. Irganox 245: ethylene bis(oxyethylene) bis[3-(5-tert-butyl-4-hydroxy-m-tolyl), manufactured by Ciba Japan. "Non-A": Refers to compounds not corresponding to component (A). | | | | | | | |

As can be seen from Table 1, the embodiments of the present invention had favorable properties for Young's modulus, breaking strength, and breaking elongation, but comparative examples 1 and 2 that used a blend of urethane acrylate that did not have a soft segment derived from an aliphatic polyol and a urethane acrylate that did not have a hard segment derived from an aromatic polyol had lower breaking elongation values in particular, and the mechanical strength of the hardened material was insufficient.

## Claims

1. A radiation curable resin composition for electrical wire coating layer, comprising:
(A) a urethane (meth)acrylate having a hard segment derived from an aromatic polyol and a soft segment derived from an aliphatic polyol in a single molecule;
(B) a compound with a cyclic structure and one ethylenic unsaturated group; and
(C) a radiation polymerization initiator.

2. The composition according to claim 1, wherein the hard segment of the component (A) is derived from an aromatic polyol having a cyclic structure and an arithmetic mean molecular weight from 300 to 700 g/mol, and the soft segment is derived from a polyol having an aliphatic structure and an arithmetic mean molecular weight from 300 to 3000 g/mol.

3. The composition according to claim 2, wherein the hard segment of the component (A) is derived from an aromatic polyol having a bisphenol structure and an arithmetic mean molecular weight from 300 to 700 g/mol, and the soft segment is derived from an aliphatic polyol having an aliphatic polyether structure with 2 to 5 carbon atoms and an arithmetic mean molecular weight from 300 to 1000 g/mol.

4. The composition according to any one of claims 1-3, wherein the component (A) is obtained by reacting an aromatic polyol, an aliphatic polyol, polyisocyanate, and a (meth)acrylate with a hydroxyl group.

5. The composition according to any one of claims 1-4, further comprising (D) a silicone compound with an average molecular weight between 800 and 30 000 g/mol.

6. The composition according to any one of claims 1-5, wherein the (D) silicone compound is a polyether modified silicone or a urethane (meth)acrylate modified silicone.

7. The composition according to any one of claims 1-6, wherein component (B) comprises at least one compound selected from the group consisting of N-vinyl pyrrolidone, N-vinyl caprolactam, isobornyl (meth)acrylate, and (meth)acryloyl morpholine.

8. Use of a composition according to any one of claims 1-7, for forming an insulator layer on a coated electrical wire with a core conductor and an insulator layer.

9. Use of a composition according to any one of claims 1-7, for forming a sheath layer on a cable that has a sheath layer and one or a plurality of coated electrical wires.

10. A sheath layer for a cable or an insulator layer for a coated electrical wire, made by curing any one of the compositions disclosed in claims 1-7.

11. A cable or coated electrical wire having a sheath or an insulator layer according to claim 10.

12. A method for preparing a sheath layer for a cable or for an insulator layer or a coated electrical wire, comprising a step of irradiating radiation onto a composition according to any one of claims 1-7, and curing.

13. An automobile comprising the cable or coated electrical wire of claim 11.

## Patentansprüche

1. Strahlungshärtbare Harzzusammensetzung für Elektrodrahtbeschichtung, umfassend:
(A) ein Urethan(meth)acrylat mit einem harten Segment, abgeleitet von einem aromatischen Polyol, und einem weichen Segment, abgeleitet von einem aliphatischen Polyol in einem einzelnen Molekül;
(B) eine Verbindung mit einer zyklischen Struktur und einer ethylenisch ungesättigten Gruppe; und
(C) einen Strahlungspolymerisationsinitiator.

2. Zusammensetzung nach Anspruch 1, wobei das harte Segment der Komponente (A) von einem aromatischen Polyol mit einer zyklischen Struktur und einem arithmetischen mittleren Molekulargewicht von 300 bis 700 g/Mol abgeleitet ist, und das weiche Segment von einem Polyol mit einer aliphatischen Struktur und einem arithmetischen mittleren Molekulargewicht von 300 bis 3000 g/Mol abgeleitet ist.

3. Zusammensetzung nach Anspruch 2, wobei das harte Segment der Komponente (A) von einem aromatischen Polyol mit einer Bisphenolstruktur und einem arithmetischen mittleren Molekulargewicht von 300 bis 700 g/Mol abgeleitet ist, und das weiche Segment von einem aliphatischen Polyol mit einer aliphatischen Polyetherstruktur mit 2 bis 5 Kohlestoffatomen und einem arithmetischen mittleren Molekulargewicht von 300 bis 1000 g/Mol abgeleitet ist.

4. Zusammensetzung nach einem der Ansprüche 1-3, wobei die Komponente (A) durch Reagieren eines aromatischen Polyols, eines aliphatischen Polyols, Polyisocyanats und eines (Meth)acrylats mit einer Hydroxylgruppe erhalten wird.

5. Zusammensetzung nach einem der Ansprüche 1-4, ferner umfassend (D) eine Siliconverbindung mit einem mittleren Molekulargewicht zwischen 800 und 30.000 g/Mol.

6. Zusammensetzung nach einem der Ansprüche 1-5, wobei die (D) Siliconverbindung ein Polyether-modifiziertes Silicon oder ein Urethan(meth)acrylat-modifiziertes Silicon ist.

7. Zusammensetzung nach einem der Ansprüche 1-6, wobei Komponente (B) mindestens eine Verbindung umfasst, ausgewählt aus der Gruppe bestehend aus N-Vinylpyrrolidon, N-Vinylcaprolactam, Isobornyl(meth)acrylat und (Meth)acryloylmorpholin.

8. Verwendung einer Zusammensetzung nach einem der Ansprüche 1-7 zur Bildung einer Isolierschicht auf einem beschichteten Elektrodraht mit einem Kernleiter und einem Isolierleiter.

9. Verwendung einer Zusammensetzung nach einem der Ansprüche 1-7 zur Bildung einer Mantelschicht auf einem Kabel, das eine Mantelschicht und eine oder mehrere beschichtete Elektrodrähte aufweist.

10. Mantelschicht für ein Kabel oder Isolierschicht für einen beschichteten Elektrodraht, hergestellt durch Härten einer der Zusammensetzungen, offenbart in den Ansprüchen 1-7.

11. Kabel oder beschichteter Elektrodraht mit einer Mantel- oder einer Isolierschicht nach Anspruch 10.

12. Verfahren zur Herstellung einer Mantelschicht für ein Kabel oder für eine Isolierschicht oder einen beschichteten Elektrodraht, umfassend einen Schritt der Bestrahlung einer Zusammensetzung nach einem der Ansprüche 1-7 und Härtung.

13. Automobil, umfassend das Kabel oder den beschichteten Elektrodraht nach Anspruch 11.

## Revendications

1. Composition de résine durcissable par rayonnement pour une couche de revêtement de fil électrique, comprenant :
(A) un (méth)acrylate d'uréthane comprenant un segment dur dérivé d'un polyol aromatique et un segment mou dérivé d'un polyol aliphatique dans une même molécule ;
(B) un composé ayant une structure cyclique et un groupe éthylénique insaturé ; et
(C) un initiateur de polymérisation par rayonnement.

2. Composition selon la revendication 1, dans laquelle le segment dur du composant (A) est dérivé d'un polyol aromatique ayant une structure cyclique et un poids moléculaire moyen arithmétique de 300 à 700 g/mol, et le segment mou est dérivé d'un polyol ayant une structure aliphatique et un poids moléculaire moyen arithmétique de 300 à 3000 g/mol.

3. Composition selon la revendication 2, dans laquelle le segment dur du composant (A) est dérivé d'un polyol aromatique ayant une structure bisphénol et un poids moléculaire moyen arithmétique de 300 à 700 g/mol, et le segment mou est dérivé d'un polyol aliphatique ayant une structure polyéther aliphatique comprenant de 2 à 5 atomes de carbone et un poids moléculaire moyen arithmétique de 300 à 1000 g/mol.

4. Composition selon l'une quelconque des revendications 1 à 3, dans laquelle le composant (A) est obtenu en faisant réagir un polyol aromatique, un polyol aliphatique, un polyisocyanate, et un (méth)acrylate avec un groupe hydroxyle.

5. Composition selon l'une quelconque des revendications 1 à 4, comprenant en outre (D) un composé de silicone ayant un poids moléculaire moyen compris entre 800 et 30 000 g/mol.

6. Composition selon l'une quelconque des revendications 1 à 5, dans laquelle le composé de silicone (D) est une silicone modifiée par un polyéther ou une silicone modifiée par un (méth)acrylate d'uréthane.

7. Composition selon l'une quelconque des revendications 1 à 6, dans laquelle le composant (B) comprend au moins un composé choisi dans le groupe constitué par la N-vinylpyrrolidone, le N-vinylcaprolactame, le (méth)acrylate d'isobornyle et la (méth)acryloylmorpholine.

8. Utilisation d'une composition selon l'une quelconque des revendications 1 à 7, pour former une couche isolante sur un fil électrique revêtu avec un conducteur noyau et une couche isolante.

9. Utilisation d'une composition selon l'une quelconque des revendications 1 à 7, pour former une couche de gaine sur un câble qui comprend une couche de gaine et un ou plusieurs fils électriques revêtus.

10. Couche de gaine pour un câble ou une couche isolante pour un fil électrique revêtu, préparée par durcissement d'une composition selon l'une quelconque des revendications 1 à 7.

11. Câble ou fil électrique revêtu comprenant une couche de gaine ou une couche isolante selon la revendication 10.

12. Procédé de préparation d'une couche de gaine pour un câble ou d'une couche isolante pour un fil électrique revêtu, comprenant une étape consistant à produire un rayonnement sur une composition selon l'une quelconque des revendications 1 à 7, et à la durcir.

13. Automobile comprenant le câble ou le fil électrique revêtu selon la revendication 11.
